# EUROPEAN PATENT APPLICATION

(11) **EP 2 676 941 A1**
(43) Date of publication of application: **25.12.2013**
(21) Application number: 12172949.5
(22) Date of filing: 21.06.2012
(51) Int. Cl.: C04B 7/02, C04B 7/44

(54) **Process and plant for cement clinker production**

(71) Applicant: Carbon-Hydrogen-Minerals SPRL, 4610 Vise (Argenteau) (BE)
(72) Inventor: Meyers, Christian, 4601 Visé (Argenteau) (BE); Ericsson, Hans, 11447 Stockholm (SE)
(74) Representative: Bosch, Henry

(57) **Abstract**

Process for cement clinker production including a raw meal preheating step performed in a preheating zone, a calcination step in which the raw meal is brought to a temperature of approx. 800-850°C leading to substantial decomposition of the mineral constituents of the raw meal into their oxides, and a sintering step in which the load is brought to a temperature of 1300 to 1450°C to form Ca₂SiO₄ (or (CaO)₂.SiO₂), to further decompose calcium carbonate and partially melt the load to form Ca₃.SiO₅ (or (CaO)₃.SiO₂) in a rotary kiln (10), followed by cooling of the resulting clinker in a clinker cooling zone (20), and optionally by a clinker milling step in a clinker milling zone, wherein untreated oil sludge is supplied (100) into an injection zone (120) part of the calcination zone (110), operated at a material temperature of approx. 800-850 °C. The invention further relates to a plant for carrying out said process.

## Description

### Background Of The Invention

The present invention relates to an improved process for cement clinker production and an improved plant for carrying out the improved process. The present invention furthermore provides a new use of oil sludge.

Known processes for cement production include a preheating step, in which raw meal generally consisting in a mix of lime stone and clay and/or shale as a source of minerals such as silica, aluminum and calcium is preheated, a calcination step in which the raw meal is brought to a temperature beyond 800°C leading to substantial decomposition of the mineral constituents of the raw meal into their oxides, and a sintering step in which the load is brought to a temperature of 1300 to 1450°C to form Ca₂SiO₄ (or (CaO)₂.SiO₂), to further decompose calcium carbonate and partially melt the load to form Ca₃.SiO₅ (or (CaO)₃.SiO₂), followed by cooling of the resulting clinker and by a clinker milling step. The sintering step and to some extent also the calcination step are nowadays generally performed in a rotary kiln. A rotary kiln consists in a slightly inclined (1 - 4°) steel tube rotating about its axis, loaded at the upper end, causing the load to move downhilland equipped with a burner at the lower end. As the load moves under the burner flame in the lower part of the kiln tube, it reaches its peak sintering temperature and is then discharged at the lower end into a cooler. The air required for the burner may be preheated by cooling the clinker. The raw mix may be preheated with the hot gases leaving the upper end of the rotary kiln.

Two major processes are known and distinguished by the raw meal preparation, the wet process and the dry process. In the wet process, the mineral components are ground with added water. While this process has the advantage of a more efficient raw mix preparation and more efficient introduction of the raw meal into the rotary kiln because of reduced dust expulsion at the upper kiln end, it also suffers some significant drawbacks, including extra energy requirements for drawing off the water and an extended kiln length for a given clinker output.

The present invention more specifically relates to the dry process.

Fuels used for firing the kiln burnermay include fossil fuels, such as coal, petroleum coke, heavy fuel oil or gas. Coal is generally preferred because it yields a luminous flame and can generate by radiation temperatures up to 2050°C in the kiln. It is also known to inject oil sludge into the lower end of the kiln. In addition to the primary fuels (introduced at the lower end of the kiln), various combustible waste materials have been fed into the process, which add energy as well as raw materials (minerals) into the process. An example of such waste materials are used tires, which completely burn and the steel cord liner of which adds minerals to the kiln load which then get incorporated into the cement clinker. Another example is sewage sludge or dredging sludge. Other materials such as solvents or clinical wastes are also generally disposed off in cement kilns.

A plant for carrying out the above cement production process generally comprises a raw material preheating zone, a calcination zone, a sintering zone, a clinker cooling zone and optionally a clinker milling zone. As described above, the sintering zone is located in the rotary kiln, close to the flame. The clinker cooling zone is located downstream of the kiln, at the clinker discharge. The cooling air is heated up by taking heat from the hot clinker (leaving the kiln at more than 1100 °C) and may be used as primary air in the kiln burner. The calcination zone may be partially located in the upper part of the kiln, partially consist in calcination equipment, such as cyclones, mounted upstream of the rotary kiln. In the case of the dry process, the raw mix is preheated by the hot combustion gases expulsed from the rotary kiln. It is known to have this heat exchange between combustion gases and raw mix efficiently performed in cyclones. In building successive cyclone stages, one may bring the temperature of the raw mix up to approximately 800 - 850 °C required for calcination of the raw meal. In the alternative or in addition, one may also build a precalciner upstream of the rotary kiln. Such equipment may consist in a suspension heater fired with fuel and receive hot tertiary air from the clinker cooler. The purpose of such pre-calciner is to increase the degree of calcination of the load prior to entering the rotary kiln. As a result, one may use a longer part of the kiln length for sintering, thus increasing output for a given rotary kiln. GB-1454877 discloses a particular embodiment of such equipment.

US-4533396 discloses the injection into the preheating system, that is into one of the cyclone stages, of solid fuels, possibly mixed with raw meal. Said solid fuels are selected from low-grade fuels, such as garbage, coal residues and oil shale.

JP-11092184 discloses a process for cement clinker production, in which a water-containing sludge, essentially sewage sludge, in a dispersed state, is injected between the pre-calciner and the kiln material inlet, at the so-called slope. The injection of sewage sludge provides minerals to the clinker and hence cement end product obtained from cement clinker. The injection of such sludge into the calcination zone generally requires some pre-treatment of the sludge in order to reduce the water content (see EP-1947066). While the injection of the sludge adds energy into the system, it also requires energy to draw off the water. One generally talks about disposal of the sludge. In addition, the storage of sewage sludge prior to injection may lead to sedimentation and hence to the supply of inconsistent quality of sludge input. To counter this problem, the sludge may be subjected to a prior treatment, such as the incorporation of ash or other dry powder material, or water, depending on whether the purpose of the treatment is to reduce or increase the flow properties of the sludge.

WO94/29231 discloses a method and plant for cement clinker production which make use of different types of sludge. According to the patent disclosure, the sludge requires treatment prior to its use in the cement clinker production system. According to the patent disclosure, the sludge is dried and optionally finely divided prior to supply into the system. The dried and optionally divided sludge may be mixed with raw material or used as fuel in the pre-calciner or in the kiln burner. Applicable types of sludge include, fiber rejects, combustible chemical residues, e.g. waste derived from nylon and pesticide manufacturing, drill sludge resulting from oil exploration and similar types. Obviously, the types of sludge envisaged by the patent applicant consist in water based sludge. Also, the mixing of said sludge with raw material is acceptable only if the sludge is a pure mineral sludge comprising essentially no organic or hydrocarbon material which otherwise would easily and undesirably escape to and pollute the environment.

The same document mentions in relation with prior art (see bottom of page 2) that oil sludge, e.g. residues from disused oil tanks, receiving stations for used engine oil and residues from automobile scrapping etc., must be subjected to a treatment with calcium oxide to form a brown free-flowing powder before it may be used as fuel in the pre-calciner and its calorific value may thus be utilized. While such treatment may be required to render the relevant oil sludge useable as a (solid) fuel for the pre-calciner, it obviously increases the costs of the whole production process.

It is also known to mix such oil sludge with organic matter, such as wood chips prior to injection into the calcination zone or in the kiln main burner.

In order to be able to effectively utilize the organic combustible material but also the inorganic incombustible material of an oil sludge from an oil tank for petroleum based or coal based oil, JP-2005239451 proposes to mix the oil sludge with inorganic powder to prepare a granular or slurry like mixture prior to supply into the process.

WO99/48831 discloses a process for converting well drill cuttings into raw materials for the cement production. The drilling of wells generates a water based drill sludge and a heavily loaded oil-containing sludge. The oil containing sludge includes oil containing mineral and distilled fuel, asphalt, kaolin, silica, gilsonite asphalt, methyl alcohol, diesel oil, long-chain fatty acids in oil containing minerals, a mixture of fatty salt of imidazole and organic calcium sulfonate, contaminated clay, organic resins, mixture of modified diamine and polybasic acid, CaCl2, oxidized fatty acid derived from oil, dipropylene glycol methyl ether, ammonium and humic acid derived from Leonardite, contaminated clay derived from a quaternary ammonium composition and montmorillonite, conditioners for inverse emulsions. The water-based drill sludge is introduced into the crushing of raw meal. The oil-based drill sludge is introduced into a temperature zone of 1000 - 1100 °C. No further details are shown but it is understood the oil-based drill sludge is introduced into the precalciner which actually operates at such high temperatures.

Oil sludge such as residues from oil tanks, receiving stations for used engine oil, lubricants from metal working and residues from automobile scrapping to a large extend are recycled and may not be reused as fuel. The partremaining after treatment for recycling needs to be destroyed and often is incinerated. Destruction obviously generates costs. Such oil sludge includes only few parts of water, some minor parts of mineral contaminations, such as silica, alumina, and iron generally from lubricating operations, and a major part of organic material, essentially hydrocarbons, that bear a significant amount of residual energy.

### Objects Of The Invention

Rather than disposing off such residues by incineration, the inventors have found that it may be advantageous to recover that product as well as the energy contained in it by supplying such oil sludge directly into the calcination zone without any prior treatment other than a gross filtration, in order to exclude large objects that might block or clog the transfer devices used to transport and inject the relevant sludge as appropriate.

The present invention thus seeks to provide an advantageous use of such oil sludge which otherwise is discarded and would be disposed off by incineration. The use according to the invention consists in an efficient recovery of waste product, in contrast to disposal of waste products such as sewage sludge or dredging sludge, the energy of which is essentially consumed to evaporate the water content.

The present invention further seeks to improve the production costs of cement clinker and, hence, cement by reducing "noble energy" input and by increasing waste material input as energy provider and raw material provider.

The CO2 generation by combustion of the relevant oil sludge can obviously not be avoided. It needs to be emphasized, however, that incineration of the oil sludge would generate a similar amount of CO2 while the cement clinker manufacturing process would, in the absence of oil sludge addition, require additional fuel input with concomitant CO2 production. The use of oil sludge according to the invention thus participates in global CO2 reduction by reduction of fossil fuel usage and avoiding the separate incineration of the sludge.

### Summary Of The Invention

The present invention thus provides a process for cement clinker production including a raw meal preheating step performed in a preheating zone, a calcination step in which the raw meal is brought to a material temperature of about 800 - 850 °C leading to substantial decomposition of the mineral constituents of the raw meal into their oxides, and a sintering step in which the load is brought to a temperature of 1300 to 1450°C to form Ca₂SiO4 (or(CaO)₂.SiO₂), to further decompose calcium carbonate and partially melt the load to form Ca₃SiO5 ((or (CaO)₃.SiO₂) in a rotary kiln, followed by cooling of the resulting clinker in a clinker cooling zone, and optionally by a clinker milling step in a clinker milling zone, wherein oil sludge is supplied into an injection zone comprised within the calcination zone, operate data material temperature of about 800 - 850°C. Preferably, the oil sludge is supplied at the bottom discharge of the lowest cyclone stages and/orof the precalciner, if appropriate, and/or at the feed-in slope of the rotary kiln.

One may use any type of oil sludge in accordance with the invention. Advantageously, however, one may use oil sludge consisting in residues from oil tanks, receiving stations for used engine oil, lubricants from metal working and residues from automobile scrapping. Such oil sludge contains few parts of water (below 30 w%, preferably about 25 w%), some minor parts of minerals, such as silica, alumina and iron (generally from lubricating operations), and a major part, that is 70 - 80 % dry weight, of organic combustible material, essentially hydrocarbons. That type of oil sludge is waste and difficultly to re-use and normally is incinerated with concomitant generation of carbon dioxide.

It has been found, however, that injection of the oil sludge according to the invention has the advantage that the sludge will almost instantaneously be decomposed and burned at temperatures significantly above 800°C,that is temperatures higher than normally applicable in an incinerator. The mineral supply then gets integrated into the load moving through the rotary kiln for sintering (clinker formation) and into the final cement product.

Another advantage of injecting the oil sludge according to the invention is that a substantial amount of energy is adduced in an area of the installation where the temperature of the material is essentially constant and the added energy is consumed for chemical conversion.

It may be possible to inject some oil sludges as fuel in the burner or in the pre-calciner burner (secondary burner), but most of the oil sludges and more specifically oil sludges as defined above are a waste product that may not be used as fuel, unless pretreated and/or homogenized. The invention now suggests a new use of such waste product. The addition of such oil sludge and its energy as per the present invention in a defined part of the calcination zone operating at a material temperature of approx. 800 - 850°Cis novel and brings about unexpected advantages as can be seen herein.

The amount of sludge injected into the process is advantageously limited by the amount of sulfur supplied into the final cement product. In fact, the sulfur content in the load entering the rotary kiln needs to be controlled below an upper limit of approx. 6 % in order to avoid excessive S02 and/or sulfate formation and acidic operating conditions. Unfortunately, depending upon the source of hydrocarbons present in the sludge, relatively high levels of sulfur (2 - 5 %) may be present in the oil sludge. The skilled person will be able to find the appropriate balance between alkali, sulfur and chloride introduced into the process, depending on the relevant equipment, such as presence or absence of a by-pass at the kiln exit, and the optimum operating conditions for the production of the desired cement clinker.

The viscosity of the waste product, oil sludge, does not have any significant importance; the essential criteria is that one needs to be able to transfer/pump it into the system. For practical reasons, the viscosity of the oil sludge advantageously is about 200 - 450 cP, preferably 250 - 400 cP, and may preferably be transferred by means of a volumetric pump, such as a piston pump or a diaphragm pump or similar pump. Some viscosity adaptations may sporadically be practiced upstream of the transfer equipment, if so required.

According to a preferred embodiment, the oil sludge is injected at the slope, preferably at the top of the slope on which the at least partially calcinated load enters the rotary kiln.

According to another preferred embodiment, in which the calcination of the raw meal is at least partially performed in successive cyclone stages, the oil sludge is injected at the bottom discharge of one or more of the lowest cyclones. As explained above, several cyclone stages are provided for efficient heat exchange between combustion gases and raw meal. As the meal falls through the individual cyclone stages, it is heated up. In the lower stages, the temperature raises and the meal reachesapproximately 800 - 850 °C being thereby already subjected to calcination outside of the rotary kiln.

A preferred process for clinker production comprises a fueled pre-calcination known per seoperated at gas temperatures of about 1000 - 1100 °C, upstream of the rotary kiln, the purpose of which is to add further energy into the calcination zone, upstream of the rotary kiln.

The invention further provides a plant for carrying out the above cement production process, generally comprising a raw material preheating zone, a calcination zone, a sintering zonelocated in a rotary kiln, a clinker cooling zone located downstream of the kiln at the clinker discharge and optionally a clinker milling zone, wherein a supply for oil sludge is arranged for injection of said oil sludge into an injection zone within the calcination zone, operated at material temperatures of approx. 800-850 °C. Such injection zone advantageously comprises the bottom discharge of the lowest cyclone stages and of the precalciner, if appropriate, and the feed-in slope of the rotary kiln.

The calcination zone is generally located in the upper part of the kiln. Advantageously, the calcination zone may, in addition, be extended bya calcination equipment mounted upstream of the rotary kiln (in the material flow direction).

It is known to have the heat exchange between combustion gases and raw mix efficiently performed in cyclones. The preheating zone may thus advantageously comprise one or more stages of cyclones.

In building successive cyclone stages, one may bring the temperature of the raw mix up to more than 800°C, that is temperatures of about 800 - 850 °Cas required for calcination of the raw meal. In such instances, one may advantageously inject the oil sludge at the bottom discharge of one or more of the lowest cyclones that are part of the calcination zone. The equipment thus comprises a sludge injection port at the bottom discharge of one or more of the lowest cyclones of the calcination zone.

According to another embodiment, the sludge may be injected at the slope,that is the slope for introduction of meal, preferably already partially calcined meal, into the rotary kiln. The equipment thus comprises a sludge injection port at the slope, preferably at the top of the slope.

Modern plants comprise a pre-calciner upstream of the rotary kiln. Such equipment is known per se and may consist in a suspension heater fired with fuel and receive hot air from the clinker cooler through a conduct by-passing the kiln. The purpose of such pre-calciner is to yet increase the degree of calcination of the load prior to entering the rotary kiln. Such pre-calciner may be mounted in parallel with one or more cyclone stages that form part of the calcination zone. The oil sludge,may then be injected into the bottom discharge of the precalciner.

The oil sludge may be transferred and injected into the process by means of a volumetric pump, preferably a piston pump or a diaphragm pump or similar. Piston pumps are known to be robust, turn slowly and displace viscous and sticky material rather easily. The discontinuous or irregular operation of such volumetric pumps does not harm, as the oil sludge is supplied in a zone where the material temperature is essentially constant, at above 800 °C, and energy input is used for the chemical conversion of the material prior to sintering. Discontinuous or irregular addition of energy therefore does not impact product quality or process management.

The invention thus also provides a new use of oil sludge, more specifically oil sludge advantageously consisting of residues from oil tanks, receiving stations for used engine oil, lubricants from metal working and residues from automobile scrapping, containing few parts of water (below 30 w%, preferably about 25 w%), some minor parts of minerals, such as silica, alumina and iron (generally from lubricating operations), and a major part of organic combustible material, essentially hydrocarbons, as energy and raw material supply in an injection zone located within the calcination zone of a dry cement manufacturing process, operating at a material temperature of about 800 - 850 °C. Injection may advantageously occur at the bottom of the lowest cyclone stages and/or of the precalciner, if appropriate, and/or at the material loading slope.

### Description Of Drawings

The invention will be explained in detail herein below with reference to the accompanying drawings. In the drawings:
- Fig. 1 is a schematic representation of a plant of the invention for performance of the process of the invention;
- Fig. 2 shows a simplified enthalpy diagram for a cement clinker production in accordance with the invention.

### Detailed Description Of The Invention

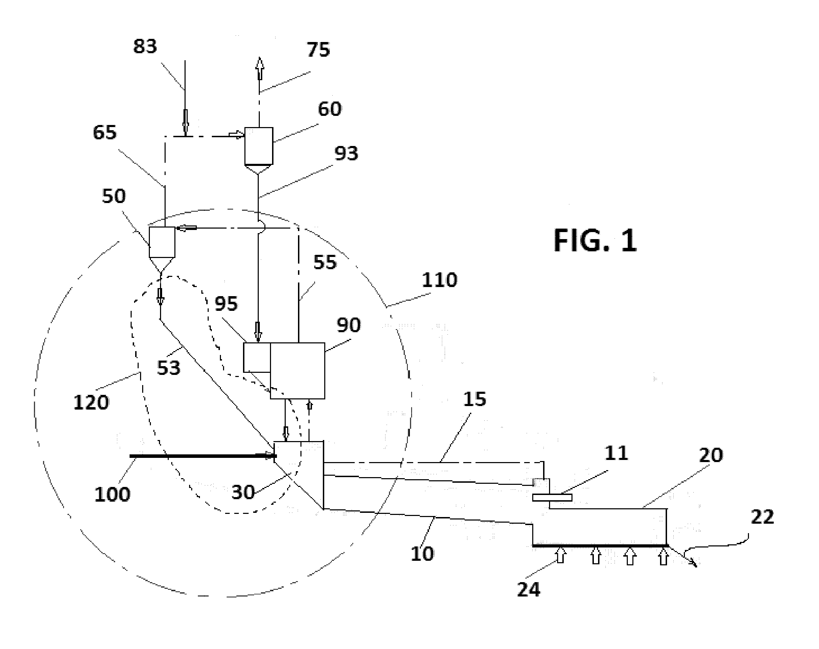

With reference to Fig. 1, a plant for cement production generally comprises a rotary kiln 10, a clinker cooler 20, a slope 30 for raw meal supply into the kiln and a meal preheating zone composed of cyclones.

The rotary kiln consists in a long slightly inclined (1° - 4°) rotary steel tube the inside of which is lined with refractory material. The tube is rotated by appropriate engines and rests on suitable bearings as is known to those skilled in the art. The lower end of the rotary kiln is equipped with a burner 11. Said burner 11 generates a high temperature flame in the kiln 10 thus providing the required energy for total or partial calcination and sintering at about 1450 °C of the cement clinker produced. The cement clinker is discharged into a cooler 20. The final product is then discharged at 22 at an average temperature of about 100 - 150 °C for further grinding,transport, storing and/or use. The primary air finally supplied to the burner 11 advantageously first enters the cooler 20 at air admission 24 for prior heating at approx. 1000 °C. The fuel used in burner 11 may consist in gas, oil or coal. As mentioned earlier in connection with the prior art, one may additionally inject alternative fuelsinto the burner. The raw material enters the rotary kiln at the upper end, through slope 30, and moves down the inclined kiln 10 while same is rotating. The raw meal is supplied at a desired particle size at loading unit and moves down several cyclone stages, in which it gets preheated by the ascending hot gases, for example 65 and 75,and already partly calcined by the ascending hot combustion gases such as 55 at temperatures significantly above 800 °C expulsed from the kiln, before entering the kiln through slope 30. The combustion gases finally are released from the whole system at temperatures ranging from approx. 350 to 450 °C. Said combustion gases may obviously be treated and/or cleaned as appropriate and known in the art. The solid fraction 83separated by an upper cyclone is injected into the combustion gas supply to the next cyclone stage 60. The solid fraction 53 separated by the lower cyclone 50 is finally supplied to the rotary kiln through slope 30. The intimate contact between the raw meal and the hot gases in the cyclone stages insures a progressive heating of the raw meal up to a temperature around 850 °C in the lower cyclone stage 50. Under such conditions, the meal is already calcinedto a certain extent before entering the rotary kiln. As a result most of the kiln length may be used for sintering at material temperatures around 1450 °C. According to a preferred embodiment and in order to further effect calcination of the raw meal prior to entering the rotary kiln, it is known to arrange a precalciner 90 upstream of the kiln (in terms of material flow), in parallel to the lower cyclone stages. Precalciner 90 preferably consists in a suspension heater in which the raw meal is suspended with combustion gases from the kiln. It comprises a hot raw meal supply 93, a burner 95 with appropriate fuel supply and primary air supply at about 1000 °C, preferably from the cooler 20, supplied by a by-pass 15 thus carrying out calcination at gas temperatures of about 1000 - 1200 °C. As mentioned earlier, the more the load supplied to the rotary kiln 10 is already calcined, the more the kiln length may be used for sintering at approx. 1450 °C thanks to the heat generated by the flame in the kiln, and the more the throughput of the kiln may be increased.

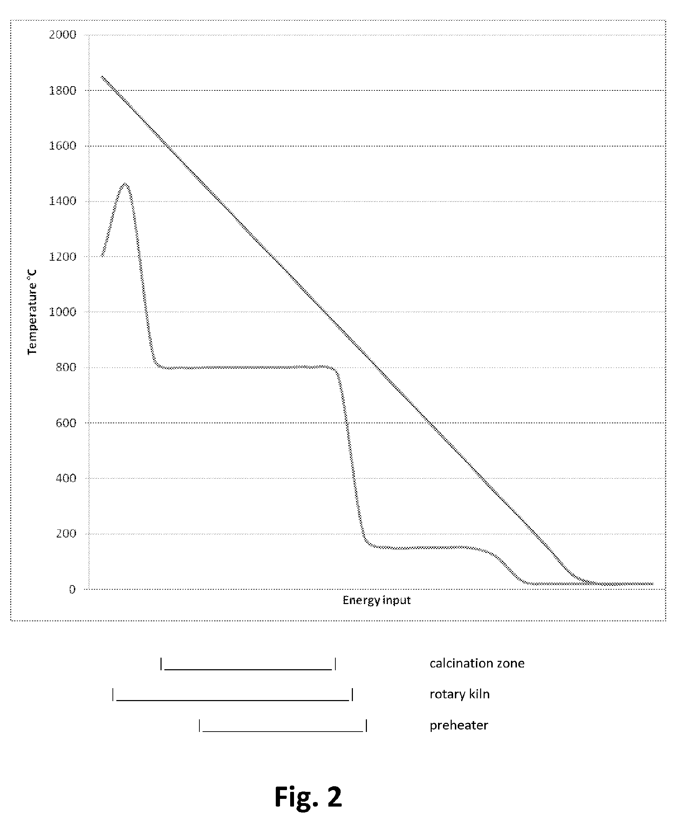

The schematic diagram of Fig. 2 shows the gas temperature (inclined line at the top of Fig.2) and the material temperature as a function of energy input for a dry process for clinker manufacturing. It appears clearly that a substantial amount of energy is required to calcine the load, prior to sintering the cement klinker at about 1450 °C.Most of the energy is recovered from the combustion gases leaving the kiln. Any additional energy added into the system at that calcination stage is used to calcine the material while the material temperature does not raise above approx. 850 °C.

It clearly appears from Fig. 2 that the more calcination is carried out outside of the rotary kiln, the more the rotary kiln may be used for sintering, thus increasing the material throughput for the same kiln or allowing for reduction of kiln dimensions for a same throughput.

One may also understand from Fig.2 that some clinker production equipment may be arranged to perform the whole calcination and sintering within the rotary kiln, just some preheating being effected outside of the kiln (see limits marked "rotary kiln"). Some other equipment may comprise a so-called pre-heater upstream of the kiln, which performs pre-heating and partial (major part of the) calcination of the load prior to entering the rotating kiln (see limits marked "pre-heater"). The calcination zone in which raw meal gets calcined at material temperatures of 800 - 850 °C (prior to sintering) consists in the shoulder which is identified as such on Fig.2.

According to the invention, and with reference to Fig.1 again, oil sludge may be charged into the system, into an injection zone 120 comprised within the calcination zone 110, by a transfer equipment 100. According to the invention, the oil sludge is supplied to the process in an injection zone 120, operating at a material temperature of about 800 - 850 °C, advantageously comprising the bottom discharge of the lowest cyclones and of the precalciner 90, as appropriate, and the slope 30. Fig. 1 shows injection of oil sludge at slope 30. In the alternative, one may also inject the oil sludge in solid fraction discharge 53 or at the discharge of the precalciner 90.

The oil sludge advantageously consists in residues from oil tanks, receiving stations for used engine oil, lubricants from metal working and residues from automobile scrapping. Said oil sludge then generally contains metal residues and other mineral materials. The viscosity of oil sludge is not of utmost importance; oil sludge found on the market placegenerally has a viscosity of about 200 - 450 cP.A preferred oil sludge shows a viscosity of 250 - 400 cP. The oil sludge is advantageously temporarily stored in an oil sludge storage tank arranged upstream of the transfer equipment 100.

A typical oil sludge compositionis shown herein below (ratios are based on dry weight):

| **compound** | **value** | **unit** |
|---|---|---|
| S | 2.50 | % |
| V | 500 | ppm |
| Cr | 320 | ppm |
| Mn | 300 | ppm |
| Fe | 3 | % |
| Co | 100 | ppm |
| Ni | 400 | ppm |
| Cu | 700 | ppm |
| Zn | 0 | ppm |
| As | 0 | ppm |
| Cd | 5 | ppm |
| Sb | 100 | ppm |
| Hg | 0 | ppm |
| Tl | 0 | ppm |
| Pb | 400 | ppm |
| Na | 150 | ppm |
| Mg | 3000 | ppm |
| Al | 2 | % |
| Si | 4 | % |
| P | 1 | % |
| Cl | 1500 | ppm |
| K | 100 | ppm |
| Ca | 3 | % |
| Ti | 1500 | ppm |
| Se | 1 | ppm |
| Mo | 150 | ppm |
| Ag | 2 | ppm |
| Sn | 85 | ppm |
| Ba | 2100 | ppm |
| oil | 83 | % |
| | | |
| water | 25 | % |
| Ash content | 33 | % |
| Calc gross cv | 17.54 | MJ/kg |

As can be seen from the Table above, an oil sludge used as per the invention adds only few water into the process, and at the same time a substantial amount of energy. When comparing the invention to injection of sewage sludge, for instance, which contains a rather high amount of water, the energy contained in it is essentially consumed for water evaporation. Dredging sludge injection may also be considered "self-supporting" if polluted with hydrocarbons. These injections known from the prior art thus rather constitute a disposal of material and globally do not add significant energy into the cement clinker manufacturing process.

When injecting the oil sludge,care needs to be taken though not to add excessive sulfur into the system as S02 and/or sulfate formation may lead to acidic process conditions.As mentioned earlier, the skilled person will be able to find the appropriate balance between alkali, sulfur and chloride introduced into the process, depending on the relevant equipment, such as presence or absence of a by-pass at the kiln exit, and the optimum operating conditions for the production of the desired cement clinker.

The transfer equipment 100 advantageously consists in a volumetric pump, preferably a piston pump or diaphragm pump or a similar pump.These equipments known per se are particularly suitable for pumping viscous sticky materials.

It is known to load used tires into the cement processing, atslope 30. Said tires are known to add energy and minerals into the kiln. The process and plant of the invention may provide for additional tire injection as well.

The inventors have found it particularly advantageous to inject the oil sludge in the calcination zone, at locations operating at a material temperature of about 800 - 850 °C because the energy added at that stage does not impact the process temperature and, to the contrary,is advantageously recovered to facilitate calcination prior to sintering. This zone thus appears to be particularly advantageous for injection of a viscous sticky waste product which nevertheless still contains a substantial amount of energy. The energy is used to effect calcination ofraw meal; the minerals contained in it are useful in the final cement composition. Irregular injection or non-homogenous oil sludge product do not significantly impact the process.

It is further to be emphasized that while CO2 generation by combustion of the oil sludge cannot be avoided, it replaces to a large extent the CO2 that would otherwise have been formed by combustion of noble energy and further destruction of the sludge by incineration with concomitant CO2 generation is no longer required. On the whole, the use of oil sludge according to the invention thus assists in reducing CO2 generation.

In addition, the destruction of oil sludge by incineration costs about 50 - 150 €/T. The use of the oil sludge in accordance with the invention provides an energy supply to the cement production process and a cost saving based on sludge disposal. High investment costs in equipment for recovering or recycling used oil, including oil sludge as defined herein, may thus also be avoided or reduced.

## Claims

1. A process for cement production including a raw meal preheating step performed in a preheating zone, a calcination step in which the raw meal is brought to a temperature of approximately 800 - 850 °C leading to substantial decomposition of the mineral constituents of the raw meal into their oxides, and a sintering step in which the load is brought to a temperature of 1300 to 1450°C to form Ca₂SiO₄ (or (CaO)₂.SiO₂), to further decompose calcium carbonate and partially melt the load to form Ca₃.SiO₅ (or (CaO)₃.SiO₂)in a rotary kiln, followed by cooling of the resulting clinker in a clinker cooling zone, and optionally by a clinker milling step in a clinker milling zone, wherein oil sludge is supplied in an injection zone comprised within the calcination zone, operated at a material temperature of approx. 800 - 850 °C.

2. Process according to claim 1, **characterized in that** the oil sludge consists in residues from oil tanks, receiving stations for used engine oil, lubricants from metal working and residues from automobile scrapping.

3. Process according to Claim 2 **characterized in that** the viscosity of the oil sludge is about 200 - 450 cP, preferably 250 - 400 cP.

4. Process according to any preceding claim, **characterized in that** the oil sludge is injected into the calcination zone, at the slope, preferably at the top of the slope on which the at least partially calcinated load enters the rotary kiln.

5. Process according to any preceding claim, **characterized in that** preheating and calcination of raw meal is effected in cyclone stages and the oil sludge is injected into the calcination zone, at the bottom discharge of one or more of the lower cyclones.

6. Process according to any preceding claim, **characterized in that** pre-calcination is effected ina pre-calcinerknown per se operated at about 1000 to 1100 °C and the oil sludge is injected into the calcination zone, at the bottom discharge of the pre-calciner.

7. A plant for cement clinker production comprising a raw material preheating zone, a calcination zone (110), a sintering zone located in a rotary kiln (10), a clinker cooling zone (20) located downstream of the kiln (10) at the clinker discharge, optionally followed by a clinker milling zone, **characterized in that** a supply for oil sludge (100) is arranged for injection of oil sludge into an injection zone (120) of the calcination zone (110), operated at a material temperature of about. 800 - 850 °C.

8. The plant according to any of claims 6 and 7 **characterized in that** the preheating zone comprises one or twostages of cyclones.

9. The plant according to any of claims 6 to 8 **characterized in that** the preheating zone is followed by one or more further stages of cyclones (50) that are part of the calcination zone (110).

10. The plant according to any of claims 6 to 9 **characterized in that** the oil sludge is injected at the bottom discharge of one or more of the cyclones (50) that are part of the calcination zone (110).

11. The plant according to any of claims 6 to 10 **characterized in that** a pre-calciner (90) operated at about 1000 to 1100 °C is mounted upstream of the rotary kiln, optionally in parallel with a cyclone (50) of the calcination zone (110); wherein the oil sludge is injected at the bottom discharge of said pre-calciner(90).

12. The plant according to any of claims 6 to 11 **characterized in that** oil sludge is transferred and injected into the process by means of a volumetric pump, preferably a piston pump, or a diaphragm pump.

13. Use of oil sludge as energy and raw material supply in an injection zone part of the calcination zone of a dry cement clinker manufacturing process, operating at a material temperature of about 800 - 850 °C.

14. Use according to claim 13 **characterized in that** the oil sludge consists of residues from oil tanks, receiving stations for used engine oil, lubricants from metal working and residues from automobile scrapping.

15. Use according to claim 13 **characterized in that** the oil sludge contains few parts of water (below 30 w%, preferably about 25 w%), some minor parts of minerals, such as silica, alumina and iron (generally from lubricating operations), and a major part of organic combustible material, essentially hydrocarbons.
